# EUROPEAN PATENT SPECIFICATION

(11) **EP 1 109 285 B1**
(45) Date of publication and mention of the grant of the patent: **05.10.2005**
(21) Application number: 00126505.7
(22) Date of filing: 08.12.2000
(51) Int. Cl.: H02K 1/16

(54) **Stator for an automotive alternator**
Stator eines Wechselstromgenerators für Fahrzeuge
Stator pour alternateur de véhicule automobile

(30) Priority: 27.12.1999 JP 37025499; 27.12.1999 JP 37716899; 14.12.1999 JP 35519499; 17.12.1999 JP 35888899; 20.12.1999 JP 36128699; 24.12.1999 JP 36753499; 24.12.1999 JP 36845399; 27.12.1999 JP 37716799
(43) Date of publication of application: 20.06.2001
(73) Proprietor: MITSUBISHI DENKI KABUSHIKI KAISHA, Tokyo 100-8310 (JP)
(72) Inventor: Higashino, Kyoko, Chiyoda-ku, Tokyo 100-8310 (JP); Adachi, Katsumi, Chiyoda-ku, Tokyo 100-8310 (JP); Asao, Yoshihito, Chiyoda-ku, Tokyo 100-8310 (JP); Morishita, Akira, Chiyoda-ku, Tokyo 100-8310 (JP); Oohashi, Atsushi, Chiyoda-ku, Tokyo 100-8310 (JP)
(74) Representative: HOFFMANN EITLE

(56) References cited:
- DE-A- 19 633 399
- GB-A- 2 108 772
- US-A- 5 986 375
- PATENT ABSTRACTS OF JAPAN vol. 1997, no. 08, 29 August 1997 (1997-08-29) & JP 09 103052 A (MITSUBISHI ELECTRIC CORP), 15 April 1997 (1997-04-15)
- PATENT ABSTRACTS OF JAPAN vol. 016, no. 192 (E-1199), 11 May 1992 (1992-05-11) & JP 04 026345 A (NIPPONDENSO CO LTD), 29 January 1992 (1992-01-29)
- PATENT ABSTRACTS OF JAPAN vol. 007, no. 033 (E-157), 9 February 1983 (1983-02-09) & JP 57 186936 A (HITACHI SEISAKUSHO KK), 17 November 1982 (1982-11-17)
- PATENT ABSTRACTS OF JAPAN vol. 1997, no. 12, 25 December 1997 (1997-12-25) & JP 09 205743 A (MATSUSHITA ELECTRIC IND CO LTD), 5 August 1997 (1997-08-05)
- PATENT ABSTRACTS OF JAPAN vol. 010, no. 197 (E-418), 10 July 1986 (1986-07-10) & JP 61 042258 A (MATSUSHITA ELECTRIC IND CO LTD), 28 February 1986 (1986-02-28)
- PATENT ABSTRACTS OF JAPAN vol. 017, no. 253 (E-1367), 19 May 1993 (1993-05-19) & JP 04 372554 A (SHIBAURA ENG WORKS CO LTD), 25 December 1992 (1992-12-25)
- PATENT ABSTRACTS OF JAPAN vol. 014, no. 268 (E-0939), 11 June 1990 (1990-06-11) & JP 02 084044 A (KOUFU MEIDENSHA:KK), 26 March 1990 (1990-03-26)
- PATENT ABSTRACTS OF JAPAN vol. 007, no. 218 (E-200), 28 September 1983 (1983-09-28) & JP 58 108939 A (SAWAFUJI DENKI KK), 29 June 1983 (1983-06-29)
- PATENT ABSTRACTS OF JAPAN vol. 1998, no. 14, 31 December 1998 (1998-12-31) & JP 10 234150 A (FUJITSU GENERAL LTD), 2 September 1998 (1998-09-02)

## Description

### BACKGROUND OF THE INVENTION

### 1. Field of the Invention

The present invention relates to an alternator driven by an internal combustion engine, and in particular, relates to a stator for an automotive alternator mounted in a vehicle such as a passenger car or truck.

### 2. Description of the Related Art

JP-A-04 026 345 discloses a stator for an automotive alternator having the features which are indicated in the preamble of claim 1.

JP-A-09 103 052 discloses a stator core which is rounded such that stator coils become an inner side thereof and both end surfaces are contacted to connect the stator core in an annular shape; and DE-A 196 33 399 discloses a stator core formed by bending a linear strip into a cylindrical shape.

JP-A-57186936 discloses projections on teeth; such projections are also disclosed in JP-A-0295743. JP-A-61042258 discloses uneven intervals between adjacent slot opening portions, for a stator having one set of three-phase stator coils.

JP-A-02084044 discloses projections on teeth, and uneven intervals between slot openings as well. JP-A-58108939 discloses projections on teeth, and uneven intervals. JP-A-10234150 discloses projections on teeth. GB-A-208772 discloses projections on teeth (Fig. 7), and also uneven intervals (Figs. 6, 7).

US-A-5986375 discloses a stator having two coil end groups with different surfaces, and suggests to control the temperature of both coil end groups so that they become equal.

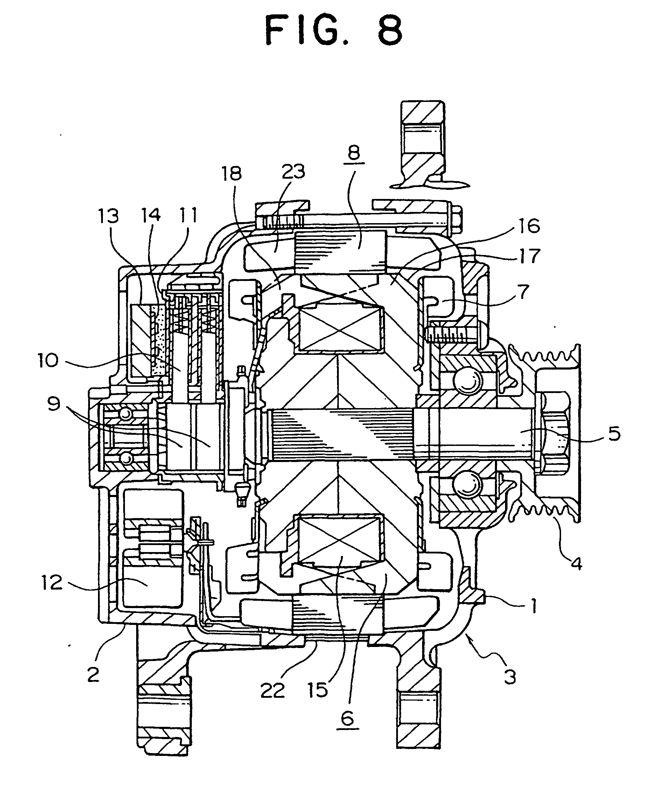

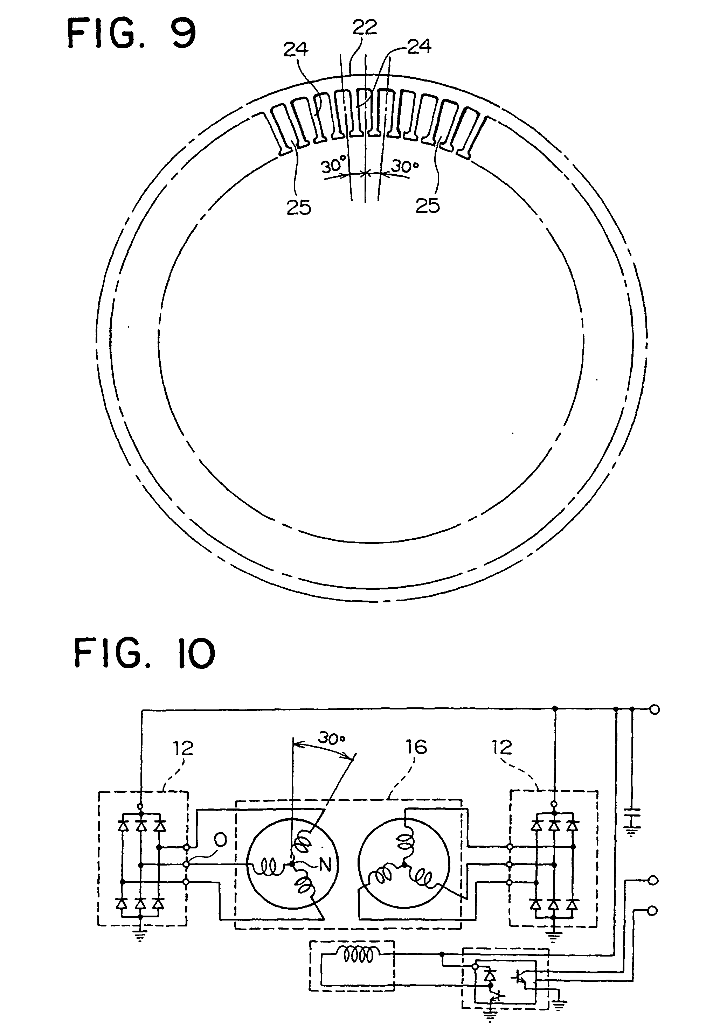

FIG. 8 is a sectional side elevation of a conventional automotive alternator. FIG. 9 is a front view of a stator core applied to a stator of a conventional automotive alternator. FIG. 10 is a circuit diagram of a conventional automotive alternator. The conventional automotive alternator shown in the figures includes, a case 3 constructed from an aluminum front bracket 1 and rear bracket 2, a shaft 5 with a pulley 4 fixed on one end thereof provided so as to be capable of rotating inside the case 3, a Lundell rotor 6 fixed to the shaft 5, fans 7 fixed on both sides of the rotor 6, a stator 8 fixed to an inner wall of the case 3, a slip-ring 9 fixed on the other end of the shaft 5 for supplying electric current to the rotor 6, a brush 10 for slidingly contacting the slip-ring 9, a brush holder 11 for receiving the brush 10, rectifiers 12 electrically connected to the stator 8 for rectifying an alternating current produced in the stator 8 into a direct current, a heat sink 13 fitted to the brush holder 11, and a regulator 14 attached to the heat sink 13 for adjusting the magnitude of the alternating voltage produced in the stator 8.

The rotor 6 includes a rotor coil 15 for flowing an electric current to generate magnetic flux and a pole core 16 which houses the rotor coil 15 and forms magnetic poles in accordance with magnetic flux. The pole core 16 includes, a pair of alternately meshed first pole core body 17 and second pole core body 18. The first pole core body 17 and second pole core body 18 are made of iron and have claw-shaped magnetic poles 19, 20 at end portions thereof. Gaps are formed between adjacent claw-shaped magnetic poles 19, 20 so that magnetic flux does not leak between the claw-shaped magnetic poles 19, 20, and also serve as cooling passages for cooling the rotor coil 15.

The stator 8 comprises a stator core 22 and two (2) sets of three-phase stator coils 23, i.e. a conductor wound on the stator core 22 at a phase difference of 30 degrees of electrical angle (see FIGS. 9 and 10). The stator core 22 is formed in an annular shape by punching thin steel sheets in a shape with convexo/concave portions at equidistant intervals and then lap winding or laminating the sheets. Slots 25 and teeth 24 extending in axial directions are formed in a inner portion of the stator core 22.

In the case of this example, there is provided the 2 sets of three-phase stator coils 23, there are twelve (12) magnetic poles of the rotor 6, 2 x 3 phases correspond to each pole, and seventy-two (72) slots 25 and teeth 24 are formed. The slots 25 are formed in the annular-shaped stator core 22 at a mechanical angle of 5 degrees (360 degrees/72). At this time, since 72 slots uniformly correspond to the 12 poles, the slots 25 are formed at a uniform interval of 30 degrees of electrical angle. The Y-Y connected two sets of three-phase stator coils 23 is provided at a phase difference of 30 degrees of electrical angle in each slot 25, and is electrically connected to the rectifier 12.

In the automotive alternator constructed in this manner, electric current is supplied from a battery (not shown) through the brushes 10 and the slip ring 9 to the rotor coil 15, generating magnetic flux. The claw-shaped magnetic poles 19 of the first pole core 17 are magnetized as north (N) poles by this magnetic flux, and those (poles 20) of the second pole core are magnetized as south (S) poles thereby. Meanwhile, rotational torque from the engine is transmitted through the belt and the pulley 4 to the shaft 5, rotating the rotor 6. Thus, a rotating magnetic field is applied to the stator winding 23, generating electromotive force therein. This alternating electromotive force passes through the rectifiers 12 and is converted into direct current, the magnitude of the current is adjusted by the regulator 14, and the battery is recharged.

In the above automotive alternator, there are one (1) slots 25 for each (1) set of the stator coils 23, each (1) phase and each (1) magnetic pole. Magnetic field leakage is seldom formed between adjacent claw-shaped magnetic poles 19, 20 of the rotor 6 via teeth 24 and the time over which magnetic flux leaks to the teeth 24 is short. Accordingly, there is a only a small decrease in the effective magnetic field for the stator coils 23 occurring due to magnetic flux leakage, and surges in the magnetic flux is reduced.

Moreover, an automotive alternator similar to the one described above is shown in Japanese Patent Application Laid-open No. 4-26345.

In a conventional automotive alternator constructed as above, since the stator core has 72 slots, which is a lot, there is a problem in that the insertion time and installation characteristics of the stator coils 23 in the stator core 22 are poor.

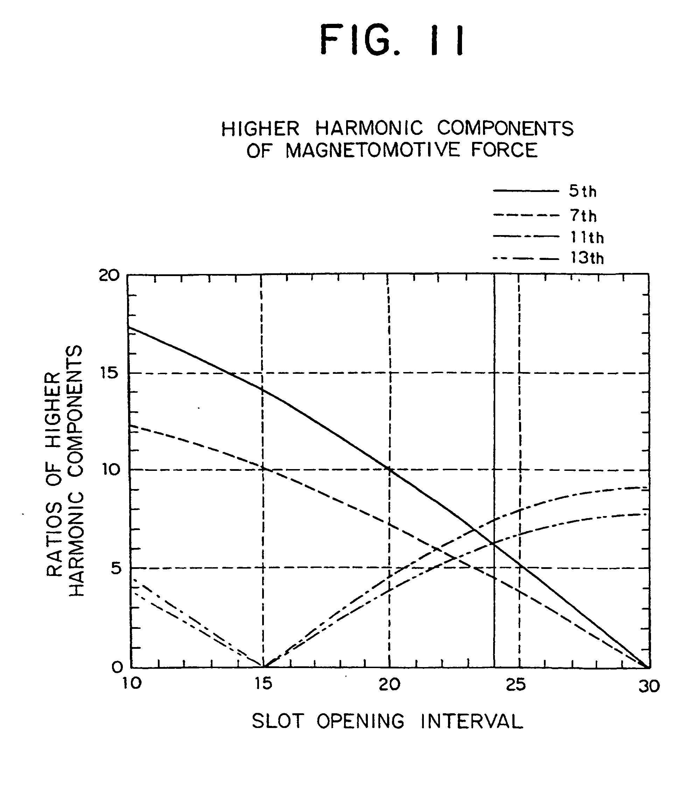

Also, with the conventional automotive alternator, as shown in FIG. 11 which is an electromagnetic field analysis chart drafted by the present inventors (Slot opening portions (the abscissa) are spaced a uniform interval of 30 degrees of electrical angle, this means that, for example, with a mechanical angle of 24 degrees, 24 degrees and 36 degrees are repeated and the interval is uneven. The ordinate shows ratios of higher harmonic components of magnetomotive force in the stator with respect to a fundamental wave) when the interval of the slot opening portions is an equal 30 degrees fifth (5^{th}) and seventh (7^{th}) harmonics are not present in the magnetic flux density waveform. Nevertheless, eleventh (11^{th}) and thirteenth (13^{th}) higher harmonic components of magnetomotive force in the stator 8 are large, and when 11^{th} or 13^{th} higher harmonic components of magnetomotive force are present in the rotor 6 there are problems in that, surges in magnetic flux cannot be sufficiently suppressed due to interference by the harmonic components and fluctuation in the generated voltage cannot be sufficiently suppressed. Moreover, magnetic attractive force is generated between the claw-shaped magnetic poles 19, 20 of the rotor 6 and the stator 8 and causes the stator 8, case 3 and the like or the claw-shaped magnetic poles 19, 20 of the rotor 6 resonate which generates a sound that is unpleasant for passengers.

### SUMMARY OF THE INVENTION

The present invention aims to solve the above problems with the conventional art and an object of the present invention is to provide a stator for an automotive alternator which has good stator coil installation characteristics, which further has a large effect on surges in magnetic flux and the magnetic attractive force between the stator and a rotor, and which can reduce higher harmonic components of magnetomotive force in the stator

According to one aspect of the present invention there is provided a stator for an automotive alternator wherein according to claim 1.

Preferrably, α degrees is in a range of from 22 to 24 degrees.

According to another preferred embodiment of the present invention, projections extending in a circumferential direction are formed on tips the teeth which partition the slots, and a mutual interval in the circumferential direction between a center of air gaps of adjacent slot opening portions is varied by projecting lengths of the projections.

According to another preferred embodiment of the present invention, widths of the teeth which partition the slots are uneven.

According to another preferred embodiment of the present invention, contact surfaces of the stator core connected as an annular-shape are formed by dividing a wide tooth among the teeth of uneven widths in a circumferential direction with a substantially orthogonal surface.

Another preferred embodiment of the present invention concerns an automotive alternator according to claim 6.

### BRIEF DESCRIPTION OF THE DRAWINGS

FIG. 1 is a perspective view for explaining a former winding structure of a stator core applied to a stator for a automotive alternator according to the present invention.
FIG. 2 is a process sectional view for explaining a manufacturing process of a stator core.
FIG. 3 is a perspective view for explaining a manufacturing process of a stator core.
FIG. 4 is a front view of a stator core.
FIG. 5 is a partial enlarged view of a stator core.
FIG. 6 is a circuit diagram of the automotive alternator according to the present invention.
FIG. 7 is an enlarged view of an essential portion of a stator core showing another example of the stator for a automotive alternator according to the present invention.
FIG. 8 is a sectional side elevation of a conventional automotive alternator.
FIG. 9 is a front view of stator core applied in the stator of a conventional automotive alternator.
FIG. 10 is a circuit diagram of a conventional automotive alternator.
FIG. 11 is a chart showing higher harmonic components of magnetomotive force in a stator.

### DESCRIPTION OF THE PREFERRED EMBODIMENT

### Embodiment 1

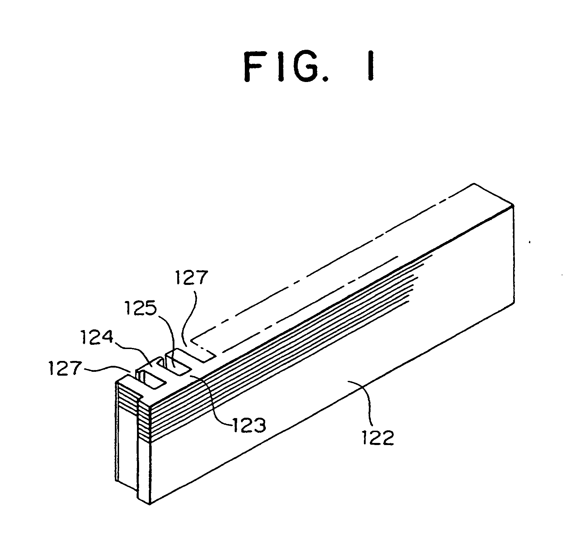

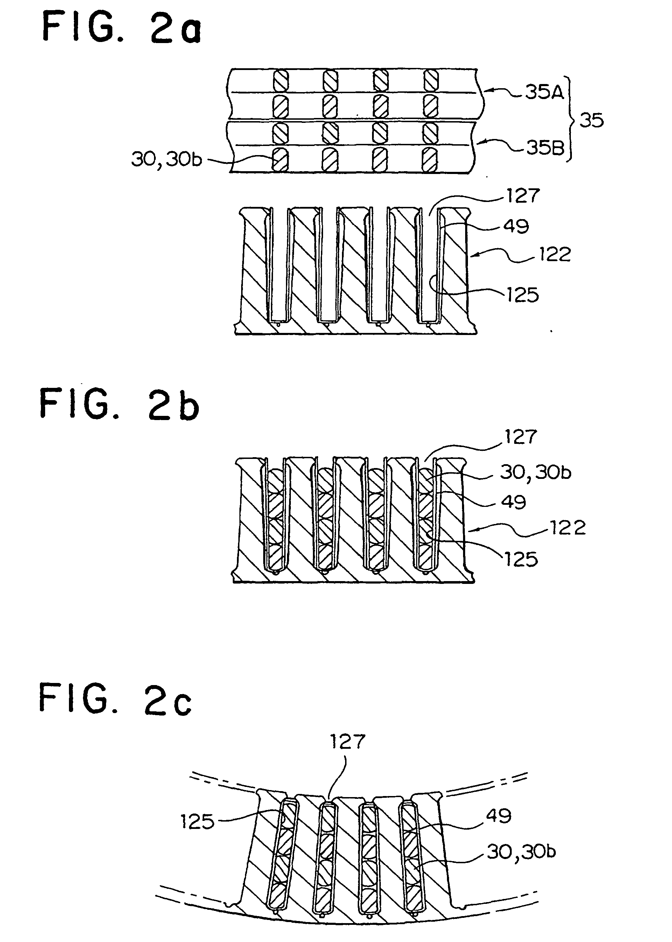

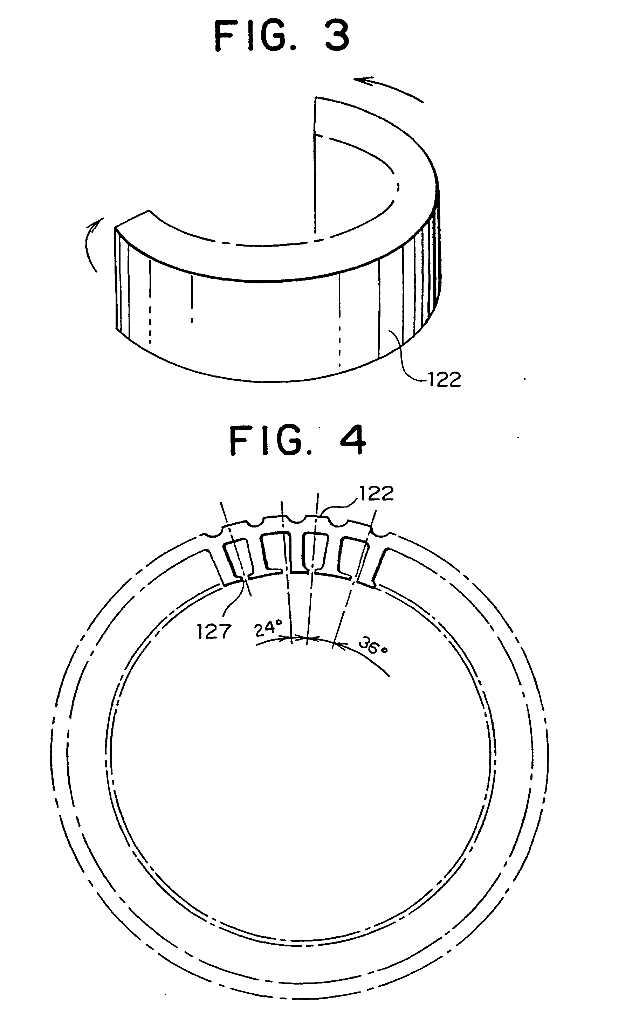

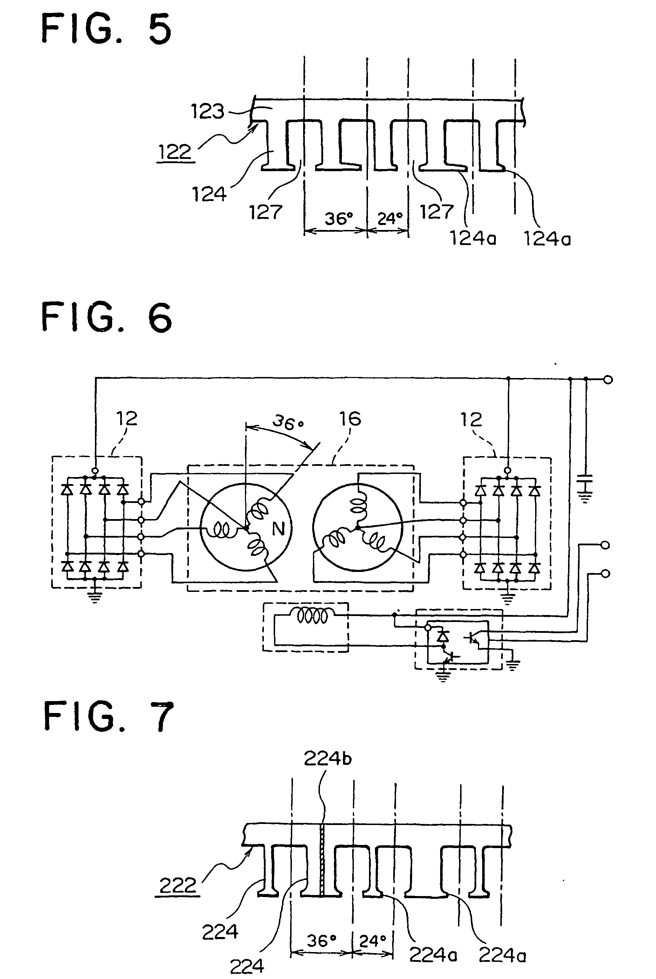

FIG. 1 is a perspective view for explaining a former winding structure of a stator core applied to the stator for a automotive alternator according to the present invention. FIG. 2 is a process sectional view for explaining the manufacturing process of a stator core. FIG. 3 is a perspective view for explaining the manufacturing process of a stator core. FIG. 4 is a front view of a stator core. FIG. 5 is a partial enlarged view of a stator core. FIG. 6 is a circuit diagram of the automotive alternator according to the present invention.

As shown in FIG. 1, a stator core 122 according to the present invention is formed in a rectangular shape by laminating a predetermined number of sheets of a SPCC material which are sheet-shaped magnetic members punched in a predetermined shape. A total number of seventy-two (72) teeth 124, which is the same as in the related art, are formed at one side of a yoke 123. Trapezoid-shaped slots 125 are formed between adjacent teeth 124.

As is shown in (a) of FIG. 2, insulators 49 are mounted in the slots 125 of the stator core 122, and straight portions of wire-strand groups 35A, 35B are inserted in each slot 125 so as to be stacked. Accordingly, as is shown in (b) of FIG. 2, wire-strand groups 35A, 35B are mounted in the stator core 122. At this time, straight portions 30b of wire-strands 30 are insulated from the stator core 122 by the insulators 49 and are received in the slots 125 so as to line up in a row in a radial direction.

Next, as is shown in FIG. 3, both end surfaces of the stator core 122 are brought together and welded, and thus a cylindrical stator core 122 is obtained, as shown in (c) of FIG. 2 and FIG. 4. By rounding the stator core 122, each slot acquires a rectangular cross-section and opening portions 127 thereof becomes smaller than the width dimension of the straight portions 30b.

FIG. 5 is a partial enlarged view of a stator core according to the present invention. In the present invention, although the total number of slots 125 is the same as that in a conventional example, 72 slots, and there are 12 rotor magnetic poles, an interval, taken from the center of air gaps of adjacent slot opening portions 127, in a circumferential direction, is uneven. That is, projections 124a extending in a circumferential direction are formed on the tips the teeth 124 which partition the slots 125, and a mutual interval in the circumferential direction between the center of air gaps of adjacent slot opening portions 127 is varied by long and thin projections 124a and short projections 124a.

The mutual interval in the circumferential direction between the center of air gaps of adjacent slot opening portions 127 is formed by repeating 24 degrees and 36 degrees of electrical angle. Hence, as shown in FIG. 6, wound two sets of three phase stator coils have a phase difference of 36 degrees of electrical angle.

By making the interval in the circumferential direction between the center of air gaps of adjacent slot opening portions 127 an uneven, repeated interval of 24 degrees and 36 degrees, as shown in FIG. 11, compared to the conventional example where the electrical angle is 30 degrees, 5^{th} , 7^{th}, 11^{th}, and 13^{th} higher harmonic components of magnetomotive force in the stator 8, which is a magnetic flux density wave form, are lowered with good balance.

Moreover, generally the upper tolerance limit of these higher harmonic components is preferably set at around 13% in order to prevent occurrence of a noise which is unpleasant for passengers. Consequently, if the interval in the circumferential direction between the center of air gaps of adjacent slot opening portions 127 is in the range of from an uneven, repeated interval of 16 degrees and 44 degrees to an uneven, repeated interval of 29 degrees and 31degrees, advantageous effects can be obtained.

Furthermore, if the interval in the circumferential direction between the center of air gaps of adjacent slot opening portions 127 is in the range of from an uneven, repeated interval of 22 degrees and 38 degrees to an uneven, repeated interval of 24 degrees and 36 degrees, the upper tolerance limit of the higher harmonic components may be set at around 8%. That is to say, 5^{th}, 7^{th}, 11^{th}, and 13^{th} higher harmonic components may be lowered with good balance.

Also, the stator core 122 having a plurality of small thin teeth 124 in a plurality of slots is not (formed as) a conventional one-piece tubular object but is shaped from a laminated rectangular body rectangular into a cylindrical shape via a manufacturing process. Hence, mounting of the stator coils on the stator core is facilitated and the quality of the product may be improved while at the same time lowering the cost.

Moreover, although the stator core 122 according to the present invention is made into a cylindrical shape from a rectangular body, it is not necessarily limited to a rectangular body and as long as the slot opening portions 127 are in an expanded state when mounting the stators coils, the effects can be achieved. For example, similar effects can be achieved by preparing a plurality of circular shapes with a large curvature which are then combined and connected while reducing the radius of curvature.

### Embodiment 2

FIG. 7 is an enlarged view of an essential portion of a stator core showing another example of the stator for a automotive alternator according to the present invention. In a stator core 222 according to the present invention, adjacent teeth 224 are formed with uneven widths. Slots 225 have approximately the same widths, and an interval in the circumferential direction between the center of air gaps of adjacent slot opening portions 227 is an uneven, repeated interval of 24 degrees and 36 degrees.

Accordingly, projections 224a extending in a circumferential direction formed in slot opening portions 227 may be formed in the same shape. Consequently, similar effects may be obtained without forming the long and thin projections and short projections provided in Embodiment 1.

Furthermore, in the present embodiment, a wide tooth 224 is divided in a circumferential direction by substantially orthogonal surfaces 224b. These surfaces 224b serve as contact surfaces when connecting a stator core 224 as an annular shape. The stator core 224 of an annular shape is produced by welding these surfaces 224b. Hence, a stator core 222 may be obtained in which the function of the contact surfaces 224b is facilitated, the connecting operation is simplified, and joining properties are thereof are high.

According to the present invention, the stator core is such that a plurality of sheet-shaped magnetic members with a plurality of teeth patterning the slots at one side of a yoke are laminated, the stator coils are disposed in the slots, and the stator core is rounded such that the stator coils become the inner side thereof and both end surfaces thereof are contacted to connect the stator core in an annular shape. Thus, since the stator core is divided when the stator coils are inserted therein, the installation characteristics thereof are improved.

Also, the mutual intervals in the circumferential direction between the center of air gaps of adjacently formed slot opening portions are formed to be uneven. Thus, because the stator core is divided, the mutual intervals can be made with high precision even when they are uneven and the stator core has a low rigidity.

Moreover, the interval of slot opening portions is a repeated electrical angle of α degrees and (60 - α) degrees, and a degrees is in the range of from 16 to 29 degrees. Thus, 5^{th}, 7^{th}, 11^{th}, and 13^{th} higher harmonic components may be lowered with good balance and reliability may be improved.

Also, the interval of slot opening portions is a repeated electrical angle of α degrees and (60 - α) degrees, and a degrees is in the range of from 22 to 24 degrees. Thus, 5^{th}, 7^{th}, 11^{th}, and 13^{th} higher harmonic components may be lowered with further good balance

Further, the interval of slot opening portions is a repealed electrical angle of 24 degrees and 36 degrees. Thus, 5^{th}, and 13^{th} higher harmonic components may be lowered as best as possible and reliability is improved.

Moreover, projections extending in a circumferential direction are formed on tips the teeth which partition the slots, and a mutual interval in the circumferential direction between the center of air gaps of adjacent slot opening portions is varied by projecting lengths of the projections. Thus, the desired structure may be easily achieved without additional components or large design changes.

Also, the widths of the teeth which partition the slots are uneven. Thus, the desired structure may be easily achieved without providing the protrusions of different lengths.

Furthermore, the contact surfaces of the stator core connected as an annular-shape are formed by dividing a wide tooth among the teeth of uneven widths in a circumferential with a substantially orthogonal surface. Thus the contact surfaces may be easily formed even when the teeth are thin due to a large number of slots.

## Claims

1. A stator for an automotive alternator;
said stator (8) comprising a stator core (122) in which a plurality of slots (125) extending in axial directions are formed at an inner circumference thereof, and two sets of three-phase stator coils (23) which are fitted into said slots (125) ;
2 slots are provided for each phase of said stator coils (122) and each magnetic pole of the rotor of the alternator, and the total number of the slots is 72 or more, and
said stator core (22) is formed such that a plurality of sheet-shaped magnetic members with a plurality of teeth (124) patterning said slots (125) at one side of a yoke (123) are laminated, said stator coils (23) are disposed in said slots (125), **characterized in that** said stator core (122) is rounded such that said stator coils (23) become an inner side thereof and both end surfaces thereof are contacted to connect said stator core (122) in an annular shape;
a mutual interval in the circumferential direction between a center of air gaps of adjacently formed slot opening portions is formed to be uneven; and
said interval of slot opening portions is either a repeated electrical angle of α degrees and (60 - α) degrees, and said a degrees is in a range of from 16 to 29 degrees;
or is a repeated electrical angle of 24 degrees and 36 degrees.

2. A stator for an automotive alternator according to Claim 1 **characterized in that**
said a degrees is in a range of from 22 to 24 degrees.

3. A stator for an automotive alternator according to claim 1 or 2 **characterized in that**
projections (124a) extending in a circumferential direction are formed on tips of said teeth (124) which partition said slots (125), and a mutual interval in a circumferential direction between a center of air gaps of adjacent slot opening portions is varied by projecting lengths of said projections (124a).

4. A stator for an automotive alternator according to any one of claims 1 to 3 **characterizing in that**
widths of said teeth (224) which partition said slots (125) are uneven.

5. A stator for an automotive alternator according to Claim 4 **characterized in that**
contact surfaces (224b) of said stator core (122) connected as an annular-shape are formed by dividing a wide tooth among said teeth (224) of uneven widths in a circumferential direction with a substantially orthogonal surface.

6. An automotive alternator comprising a stator (8) according to any one of claims 1 to 5, further comprising:
a rotor (6) provided inside the stator (8) so as to be capable of rotating, and including a rotor coil (15) for flowing a current to generate magnetic flux, and a pole core (16) for housing the rotor coil (15) and forming a plurality of claw-shaped magnetic poles in accordance with magnetic flux.

## Patentansprüche

1. Stator für einen Kraftfahrzeuggenerator;
wobei der Stator (8) einen Statorkern (122) aufweist, in welchem mehrere Nuten (125), die sich in Axialrichtung erstrecken, an dessen Innenumfang vorgesehen sind, sowie zwei Gruppen von Dreiphasen-Statorwickeln (23), die in die Nuten (25) eingepasst sind;
2 Nuten für jede Phase der Statorwickel (122) und jeden Magnetpol des Rotors des Generators vorgesehen sind, und die Gesamtanzahl an Nuten 72 oder mehr beträgt, und
der Statorkern (22) so ausgebildet ist, dass mehrere plattenförmige magnetische Teile mit mehreren Zähnen (124), welche die Nuten (125) an einer Seite eines Jochs (123) mit einem Muster versehen, zusammenlaminiert sind, und die Statorwickel (23) in den Nuten (125) angeordnet sind, **dadurch gekennzeichnet, dass** der Statorkern (122) abgerundet ist, so dass die Statorwickel (23) zu dessen Innenseite werden, und deren beide Endoberflächen in Berührung stehen, um den Statorkern (122) ringförmig zu verbinden;
ein gegenseitiger Abstand in Umfangsrichtung zwischen einem Zentrum von Luftspalten benachbart vorgesehener Nutöffnungsabschnitte ungleichmäßig ist; und
der Abstand der Nutöffnungsabschnitte entweder ein wiederholter elektrischer Winkel von α Grad und (60 - α) Grad ist, und α Grad im Bereich von 16 bis 29 Grad liegt;
oder ein wiederholter elektrischer Winkel von 24 Grad und 36 Grad ist.

2. Stator für einen Kraftfahrzeuggenerator nach Anspruch 1,
**dadurch gekennzeichnet, dass**
der Grad α im Bereich von 22 bis 24 Grad liegt.

3. Stator für einen Kraftfahrzeuggenerator nach Anspruch 1 oder 2, **dadurch gekennzeichnet, dass**
Vorsprünge (124a), die sich in Umfangsrichtung erstrecken, auf Spitzen der Zähne (124) vorgesehen sind, welche die Nuten (125) unterteilen, und ein gegenseitiger Abstand in Umfangsrichtung zwischen einem Zentrum von Luftspalten benachbarter Nutöffnungsabschnitte durch die Vorsprungslängen der Vorsprünge (124a) geändert wird.

4. Stator für einen Kraftfahrzeuggenerator nach einem der Ansprüche 1 bis 3, **dadurch gekennzeichnet, dass**
Breiten der Zähne (224), welche die Nuten (125) unterteilen, ungleich sind.

5. Stator für einen Kraftfahrzeuggenerator nach Anspruch 4,
**dadurch gekennzeichnet, dass**
Berührungsoberflächen (224b) des Statorkerns (122), die mit Ringform verbunden sind, so ausgebildet sind, dass ein breiter Zahn unter den Zähnen (224) mit ungleichen Breiten in Umfangsrichtung durch eine im Wesentlichen orthogonale Oberfläche geteilt wird.

6. Kraftfahrzeuggenerator mit einem Stator (8) nach einem der Ansprüche 1 bis 5, welcher weiterhin aufweist:
einen Rotor (6), der so innerhalb des Stators (8) vorgesehen ist, dass er sich drehen kann, und einen Rotorwickel (15) aufweist, um einen Strom zur Erzeugung eines Magnetflusses fließen zu lassen, und einen Polkern (16) zur Aufnahme des Rotorwickels (15) und zur Ausbildung mehrerer klauenförmiger Magnetpole entsprechend dem Magnetfluss.

## Revendications

1. Stator pour alternateur de véhicule automobile ;
ledit stator (8) comprenant un noyau de stator (122) dans lequel une pluralité d'encoches (125) s'étendant dans des directions axiales sont formées sur une circonférence intérieure de celui-ci, et deux jeux de bobines de stator triphasées (23) qui sont ajustées dans lesdites encoches (125) ;
2 encoches sont prévues pour chaque phase desdites bobines de stator (23) et chaque pôle magnétique du rotor de l'alternateur, et le nombre total des encoches est de 72 ou plus, et
ledit noyau de stator (122) est formé de telle façon qu'une pluralité d'éléments magnétiques en forme de feuille ayant une pluralité de dents (124) structurant lesdites encoches (125) sur un côté d'une culasse (123) sont stratifiés, lesdites bobines de stator (23) sont disposées dans lesdites encoches (125), **caractérisé en ce que** ledit noyau de stator (122) est arrondi de telle façon que lesdites bobines de stator (23) deviennent un côté intérieur de celui-ci et que les deux surfaces d'extrémité de celui-ci se rejoignent pour relier ledit noyau de stator (122) en une forme annulaire ;
un intervalle mutuel dans la direction circonférentielle entre un centre d'entrefers de parties d'ouverture d'encoche formées de façon adjacente est formé pour être inégal ; et
ledit intervalle des parties d'ouverture d'encoche est soit un angle électrique répété de α degrés et (60 - α) degrés, et ledit angle de α degrés est compris dans une plage de 16 à 29 degrés ;
soit un angle électrique répété de 24 degrés et 36 degrés.

2. Stator pour alternateur de véhicule automobile selon la revendication 1, **caractérisé en ce que** :
ledit angle de α degrés est compris dans une plage de 22 à 24 degrés.

3. Stator pour alternateur de véhicule automobile selon la revendication 1 ou 2, **caractérisé en ce que** :
des saillies (124a) s'étendant dans une direction circonférentielle sont formées sur des pointes desdites dents (124) qui séparent lesdites encoches (125), et un intervalle mutuel dans une direction circonférentielle entre un centre d'entrefers de parties d'ouverture d'encoche adjacentes varie du fait des longueurs saillantes desdites saillies (124a).

4. Stator pour alternateur de véhicule automobile selon l'une quelconque des revendications 1 à 3, **caractérisé en ce que** :
les largeurs desdites dents (224) qui séparent lesdites encoches (125) sont inégales.

5. Stator pour alternateur de véhicule automobile selon la revendication 4, **caractérisé en ce que** :
les surfaces de contact (224b) dudit noyau de stator (122) reliées en forme annulaire sont formées en divisant une dent large parmi lesdites dents (224) de largeurs inégales dans une direction circonférentielle avec une surface sensiblement perpendiculaire.

6. Alternateur de véhicule automobile comprenant un stator (8) selon l'une quelconque des revendications 1 à 5, comprenant en outre :
un rotor (6) ménagé à l'intérieur du stator (8) de façon à pouvoir tourner, et comprenant une bobine de rotor (15) pour faire circuler un courant afin de générer un flux magnétique, et un noyau polaire (16) destiné à loger la bobine de rotor (15) et former une pluralité de pôles magnétiques en forme de griffes en fonction du flux magnétique.
